# EUROPÄISCHE PATENTSCHRIFT

(11) **EP 3 461 723 B1**
(45) Veröffentlichungstag und Bekanntmachung des Hinweises auf die Patenterteilung: **06.10.2021**
(21) Anmeldenummer: 18189969.1
(22) Anmeldetag: 21.08.2018
(51) Int. Cl.: B62D 25/08, B62D 25/16, B62D 25/20

(54) **KAROSSERIESTRUKTUR FÜR EIN ZWEISPURIGES FAHRZEUG**
BODY STRUCTURE FOR A DOUBLE-TRACK VEHICLE
STRUCTURE DE CARROSSERIE POUR UN VÉHICULE À DEUX TRACES

(30) Priorität: 28.09.2017 DE 102017217264
(43) Veröffentlichungstag der Anmeldung: 03.04.2019
(73) Patentinhaber: VOLKSWAGEN AKTIENGESELLSCHAFT, 38440 Wolfsburg (DE)
(72) Erfinder: Lüken, Ingo, 38479 Tappenbeck (DE); Krauth, Werner, 38442 Wolfsburg (DE); de Boer, Hermann, 38527 Meine (DE); Weiß, Andreas, 38104 Braunschweig (DE)

(56) Entgegenhaltungen:
- DE-A1-102015 217 524
- JP-A- S59 140 182
- US-A- 5 829 824
- US-A1- 2015 137 559

## Beschreibung

Die Erfindung betrifft eine Karosseriestruktur für ein zweispuriges Fahrzeug nach dem Oberbegriff des Patentanspruches 1.

Im Fahrbetrieb, insbesondere bei Kurvenfahrten, wird die Heckseite einer Fahrzeugkarosserie mit einem um die Fahrzeuglängsmittelachse gerichtetes Torsionsmoment belastet, bei der sich die Karosserie-Heckseite gegenüber der Karosserie-Frontseite verwinden kann.

Aus der DE 10 2015 220 308 B3 ist eine gattungsgemäße Karosseriestruktur bekannt, bei der zur Erhöhung der Verwindungssteifigkeit im heckseitigen Laderaum zwischen den beiden heckseitigen Radhäusern eine Radhausquerträger abgestützt ist. Der Radhausquerträger ist nicht unmittelbar am jeweiligen Radhaus angebunden, sondern vielmehr über ein in der Fahrzeughochrichtung hochkant am Radhaus ausgebildetes Eckverstärkungs-Blechteil kraftübertragend mit dem Radhaus in Verbindung.

Die Bereitstellung des Eckverstärkungs-Blechteils in dem zwischen dem Fahrzeugboden und dem Radhaus aufgespannten Inneneckbereich erhöht beim Fahrzeug-Zusammenbau den Bauteilaufwand sowie den Montageaufwand. Zudem wird durch Bereitstellung der Eckversteifungs-Blechteile der in der Fahrzeugquerrichtung verfügbare Laderaum reduziert.

Aus der US 7 364 225 B2 ist eine weitere Karosseriestruktur für ein zweispuriges Fahrzeug bekannt, in der zwischen den heckseitigen Radhäusern eine Radhausquerträgerversteifung positioniert ist.

DE 10 2015 217524 A1 betrifft eine Karosseriestruktur für ein zweispuriges Kraftfahrzeug, mit einem heckseitigen Laderaum, der in der Fahrzeugquerrichtung durch zumindest ein heckseitiges Radhaus begrenzt ist, das aus einer fahrzeuginneren Seitenwand und einer mit radialen Abstand um ein Hinterrad verlaufenden Umfangswand aufgebaut ist, die an einer Übergangskante in die Seitenwand übergeht.

Aus US 5 829 824 A ist eine hintere Karosseriestruktur eines Fahrzeugs bekannt, die ein Paar von rechten und linken Hinterradhäusern und einen zwischen den Hinterradhäusern erstreckenden Verstärkungsquerträger umfasst, wobei der Querträger aus einem unteren Querträger besteht, der sich unter einer Bodenplatte des Fahrzeugs befindet Fahrzeug und ein oberer Querträger, der über der Bodenplatte angeordnet ist und wobei der untere Querträger, die Bodenplatte und der obere Querträger miteinander verschweißt sind.

US 2015/137559 A1 betrifft eine Struktur zum Verbinden einer Radhausverkleidung mit einem hinteren Boden eines Fahrzeugs, die den hinteren Boden, der einen hinteren Teil eines Fahrzeugbodens bildet, mit der Radhausverkleidung verbindet, an der Stoßdämpfer-Montagehalterungen an beiden Seiten des hinteren Bodens angebracht sind.

Die Aufgabe der Erfindung besteht darin, eine Karosseriestruktur für ein zweispuriges Fahrzeug bereitzustellen, bei der sowohl der Bauteilaufwand als auch der Montageaufwand beim Zusammenbau der Karosseriestruktur reduziert ist, und zwar mit im Vergleich zum Stand der Technik gleichbleibender Verwindungssteifigkeit.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 ist das heckseitige Radhaus in der Fahrzeuglängsrichtung betrachtet aus einem, das Fahrzeughinterrad mit Abstand begrenzenden Radhaus-Hinterteil und aus einem, das Fahrzeughinterrad mit Abstand begrenzenden Radhaus-Vorderteil aufgebaut. Von den beiden Radhaus-Teilen weist das Radhaus-Vorderteil eine Fügekontur auf, die ohne Zwischenlage eines zusätzlichen Eckverstärkungs-Blechteils unmittelbar in Anlageverbindung mit der Stirnseite des Radhausquerträgers ist. Zur Eckverstärkung einer zwischen dem Radhaus-Vorderteil und dem Bodenblech aufgespannten Innenecke weist das Radhaus-Vorderteil eine im Vergleich zum Radhaus-Hinterteil größere Blechdicke auf. Beispielhaft kann die Blechdicke des Radhaus-Hinterteils bei ca. 1mm liegen, während die Blechdicke des Radhaus-Vorderteils bei 2mm liegen kann. Auf diese Weise wird trotz Weglassung eines separaten Eckverstärkungs-blechteils eine ausreichend gute Verwindungssteifigkeit im Fahrzeugfondbereich erzeugt.

In einer technischen Umsetzung kann der Radhausquerträger bevorzugt materialeinheitlich und einstückig, das heißt als ein einteiliges Blechteil, zwischen den beiden heckseitigen Radhäusern verlaufen und als ein U-förmiger Hohlträger realisiert sein, dessen Hohlraum in der Fahrzeughochrichtung nach unten vom Bodenblech abgedeckt ist. Der U-förmige Hohlträger ist aus einem, vom Bodenblech in der Fahrzeughochrichtung beabstandeten Profilboden ausgebildet, der in der Fahrzeuglängsrichtung nach vorne und nach hinten in Seitenflanken mit davon abgestellten Randflanschen übergeht. Die Randflansche des Hohlträgers sind am Bodenblech zum Beispiel über Schweißpunkte angebunden.

Bevorzugt kann der U-förmige Hohlträger mit dem Bodenblech einen geschlossenen Profilquerschnitt begrenzen, der bis zur Fügeebene zwischen dem Radhausquerträger und dem Radhaus-Vorderteil durchgängig konstant ausgeführt ist. Durch Bereitstellung eines in der Fahrzeugquerrichtung unverändert konstanten Profilquerschnitt ohne Ausweitungen ergibt sich eine wesentlich vereinfachte Bauteil-Geometrie des Radhausquerträgers. Der Radhausquerträger kann stirnseitig jeweils nach außen abgestellte Fügeflansche aufweisen, die an der Fügekontur des Radhaus-Vorderteils zum Beispiel durch Schweißpunkte angebunden sind.

Am Radhausquerträger kann in gängiger Praxis eine starre Sitzanlage, insbesondere eine Rücksitzbank oder dergleichen, starr angebunden sein. Die Sitzanlage ist in gängiger Praxis im Fondbereich der Karosseriestruktur zumindest an drei Sitzanbindungspunkten karosseriefest an der Karosseriestruktur befestigt. Von den Sitzanbindungspunkten ist ein erster Sitzanbindungspunkt am Radhausquerträger positioniert, und zwar in etwa mittig um einen Querversatz vom Radhaus nach fahrzeuginnen versetzt. Ein zweiter Sitzanbindungspunkt ist unmittelbar am Radhaus positioniert, während ein dritter Sitzanbindungspunkt um einen Höhenversatz oberhalb der ersten und zweiten Sitzanbindungspunkte an der Fahrzeugseite positioniert ist. Im fertiggestellten Fahrzeug ist der dritte Sitzanbindungspunkt manuell lösbar ausgeführt, und zwar mit einem, an einer Rückenlehne der Sitzanlage ausgebildeten Rastmittel und einer damit zusammenwirkenden karosseriefesten Gegenrastkontur. Bei einer hochgeschwenkten Gebrauchslage der Rückenlehne ist das lehnenseitige Rastmittel mit der karosseriefesten Gegenrastkontur einem lösbaren Rasteingriff.

Die karosseriefeste Gegenrastkontur kann in einer technischen Umsetzung nicht unmittelbar am Radhaus positioniert sein, sondern vielmehr an einer Tragkonsole ausgebildet sein. Diese kann bauraumgünstig mit einer lichten Höhe oberhalb des Bodenblechs am Radhaus angebunden sein. Das Radhaus kann in an sich gängiger Praxis eine mit Abstand um das Fahrzeughinterrad verlaufende Umfangswand aufweisen, die in der Fahrzeugquerrichtung nach innen in eine fahrzeuginnere vertikale Radhaus-Seitenwand übergeht. Das Radhaus ist bodenseitig zum Beispiel über Schweißpunkte an einem Längsflansch des Fahrzeug-Bodenbleches angebunden. Die oben erwähnte Tragkonsole kann bevorzugt an einem oberen Scheitel der Radhaus-Umfangswand befestigt sein, und zwar mit der bereits erwähnten lichten Bauhöhe oberhalb des Bodenblechs, so dass die oben erwähnte Radhaus-Seitenwand vollständig freigelegt ist, das heißt weder von der Tragkonsole noch von einem Eckverstärkungs-Blechteil überlagert ist.

Um eine einwandfreie Maßhaltigkeit der drei oben definierten Sitzanbindungspunkte zu gewährleisten, müssen diese in einer engen Maßkette zueinander ausgerichtet sein. Um eine solche enge Maßkette zu gewährleisten, ist es bevorzugt, wenn das Radhaus-Vorderteil der Radhausquerträger und die Tragkonsole in einem Vormontagezustand zu einer separaten Schweißbaugruppe zusammengefasst sind. In der separaten Schweißbaugruppe ist der Radhausquerträger an einer ersten Fügekontur des Radhaus-Vorderteils angebunden, während die Tragkonsole an einer zweiten Fügekontur des Radhaus-Vorderteils angebunden ist. Der oben definierte zweite Sitzanbindungspunkt kann unmittelbar im Radhaus-Vorderteil positioniert sein. In diesem Fall sind sämtliche Sitzanbindungspunkte in der Schweißbaugruppe zusammengefasst, so dass in einfacher Weise robotergesteuert die Sitzanbindungspunkte mit hoher Maßhaltigkeit zueinander ausgerichtet werden können. Anschließend wird die Schweißbaugruppe auf das Fahrzeug-Bodenblech gefügt. Das Radhaus-Hinterteil wird als ein separates Bauteil an das Fahrzeug-Bodenblech sowie an das Radhaus-Vorderteil gefügt.

Nachfolgend ist ein Ausführungsbeispiel der Erfindung anhand der beigefügten Figuren beschrieben.

Es zeigen:
- Fig. 1: in einer Seitenansicht mit teilweisem Aufriss ein zweispuriges Kraftfahrzeug;
- Fig. 2: in einer perspektivischen Teilansicht eine Karosseriestruktur im Heckbereich des Fahrzeugs, und zwar mit einer Radhausquerträgerversteifung, die zwischen den heckseitigen Radhäusern verläuft;
- Fig. 3 und 4: jeweils Ansichten, anhand derer eine Fügefolge beim Zusammenbau der Karosseriestruktur veranschaulich ist.

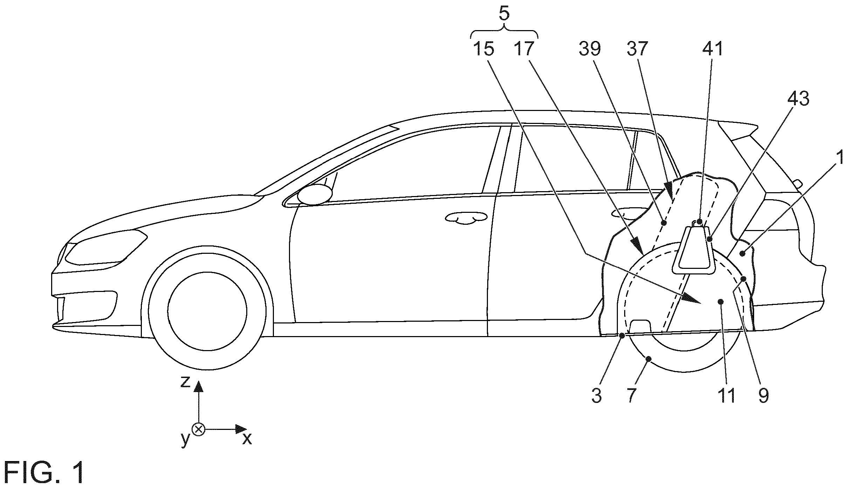

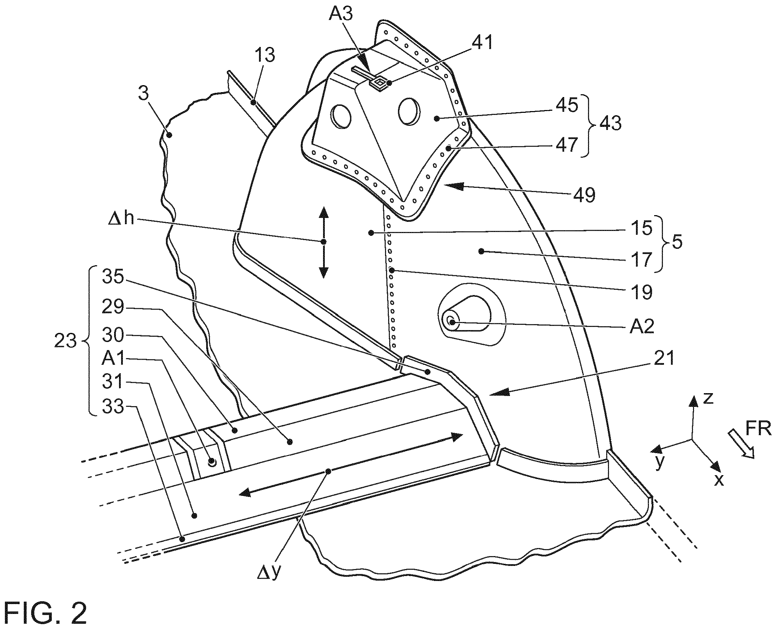

In der Fig. 1 ist mit teilweisem Aufriss ein heckseitiger Laderaum eines zweispurigen Kraftfahrzeuges gezeigt. Der heckseitige Laderaum 1 ist bodenseitig durch ein Bodenblechteil 3 sowie in der Fahrzeugquerrichtung y durch zwei Radhäuser 5 begrenzt, von denen in den Figuren lediglich ein Radhaus 5 gezeigt ist. Das Radhaus 5 weist gemäß der Fig. 1 und 2 eine mit Abstand um das Hinterrad 7 verlaufende Umfangswand 9 auf, die in der Fahrzeugquerrichtung y nach innen in eine fahrzeuginnere vertikale Seitenwand 11 übergeht. Das Radhaus 5 ist bodenseitig zum Beispiel über Schweißpunkte an einem Längsflansch 13 des Bodenbleches 3 angebunden.

Wie aus den Fig. 1 und 2 weiter hervorgeht, ist ein zwischen der Seitenwand 11 des Radhauses 5 und dem Fahrzeugbodenblech 3 aufgespannter Inneneckbereich mit einer Radhausquerträgerversteifung ausgesteift. Dessen Aufbau ist nachfolgend anhand der Fig. 1, 2 und 3 erläutert: So ist das Radhaus 5 in der Fahrzeuglängsrichtung x betrachtet zweiteilig aufgebaut, und zwar mit einem das Fahrzeug-Hinterrad 7 begrenzenden Radhaus-Hinterteil 15 und einem das Hinterrad 7 begrenzenden Radhaus-Vorderteil 17. Die beiden Radhaus-Teile 15, 17 sind an Fügeflanschen 19 miteinander in Schweißverbindung. Um eine im Fahrbetrieb ausreichend große Verwindungssteifigkeit im Fahrzeug-Heckbereich bereitzustellen, weist das Radhaus-Vorderteil 17 eine im Vergleich zum Radhaus-Hinterteil 15 wesentlich größere Blechdicke auf. Zudem weist das Radhaus-Vorderteil 17 eine erste Fügekontur 21 auf, die ohne Zwischenlage eines separaten Eckverstärkungs-Blechteils mit einer Stirnseite eines Radhausquerträgers 23 unmittelbar in Anlageverbindung ist. Auf diese Weise kann ein zwischen dem Radhaus-Vorderteil 17 und dem Bodenblech 3 aufgespannte Innenecke ausgesteift werden, und zwar ohne zusätzlichem Eckverstärkungs-Blechteil.

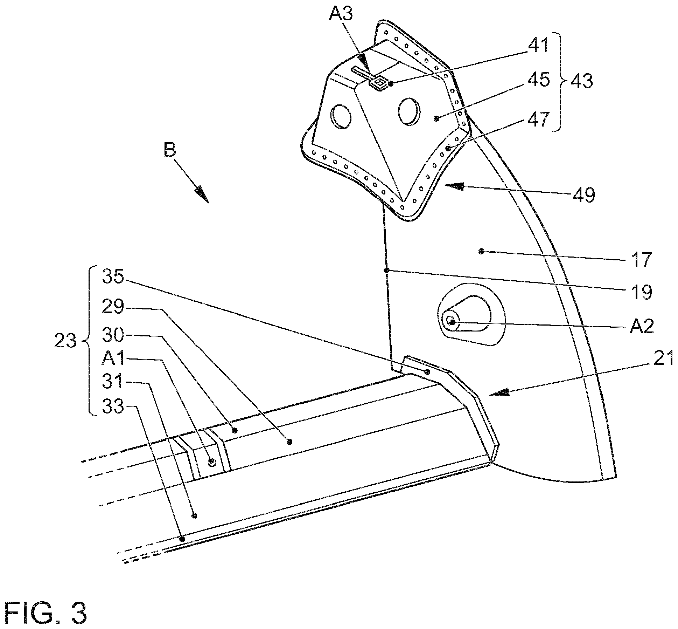

Wie aus der Fig. 2 hervorgeht, ist der Radhausquerträger 23 in einfacher Bauteil-Geometrie gefertigt und zwar aus einem materialeinheitlich sowie einstückig zwischen den Radhäusern verlaufenden U-förmigen Hohlträger. Dessen Hohlraum ist in der Fahrzeughochrichtung z nach unten vom Bodenblech 3 abgedeckt. Wie aus der Fig. 2 oder 3 hervorgeht, weist der Radhausquerträger einen vom Bodenblech 3 in der Fahrzeughochrichtung z beabstandeten Profilboden 29 auf, der in der Fahrzeuglängsrichtung x nach vorne und nach hinten jeweils in Seitenflanken 30, 31 übergeht, von denen jeweils Randflansche 33 abgestellt sind, die am Bodenblech 3 durch Schweißpunkte angebunden sind. Es ist hervorzuheben, dass der Profilquerschnitt des vom Radhausquerträgers 23 begrenzten Hohlraums 27 bis unmittelbar zur Fügeebene zwischen dem Radhausquerträger 23 und dem Radhaus-Vorderteil 17 durchgängig konstant ist, wodurch der Radhausquerträger 23 im Vergleich zum Stand der Technik geometrisch wesentlich vereinfacht darstellbar ist.

Der Radhausquerträger 23 weist an seiner Stirnseite nach außen abgestellte Fügeflansche 35 auf, die über Schweißpunkte an der ersten Fügekontur 21 des Radhaus-Vorderteils 17 angebunden ist.

Im fertigmontierten Zustand der Fahrzeugkarosserie ist in deren Fondbereich eine Sitzanlage, insbesondere eine Rücksitzbank 37 verbaut, wie sie in der Fig. 1 mit gestrichelter Linie angedeutet ist. Die Rücksitzbank 37 ist dabei an karosseriefesten Sitzanbindungspunkten A1, A2, A3 montiert. Für einen lagerichtigen Einbau der Rücksitzbank 37 sind diese Sitzanbindungspunkte A1, A2, A3 mit hoher Maßhaltigkeit in der Karosseriestruktur zu positionieren, das heißt in einer engen Maßkette zueinander auszurichten. In der Fig. 2 ist ein erster Sitzanbindungspunkt A1 unmittelbar am Radhausquerträger 23 positioniert, und zwar um einen Querversatz Δy vom Radhaus 5 nach fahrzeuginnen versetzt. Ein zweiter Sitzanbindungspunkt A2 ist unmittelbar am Radhaus-Vorderteil 17 positioniert, während ein dritter Anbindungspunkt A3 um einen Höhenversatz Δz oberhalb der ersten und zweiten Sitzanbindungspunkte A1, A2 an der Fahrzeugseite positioniert sind. Der dritte Sitzanbindungspunkt A3 ist in gängiger Praxis manuell lösbar ausgeführt, und zwar mit einem, an der Rückenlehne 39 der Sitzanlage 37 ausgebildeten (nicht dargestellten) Rastmittel und einer karosseriefesten Gegenrastkontur 41. Bei einer hochgeklappten Gebrauchslage der Rückenlehne 39 ist das lehnenseitige Rastmittel und die karosseriefeste Gegenrastkontur 41 in manuell lösbarem Rasteingriff.

Gemäß den Figuren ist die karosseriefeste Gegenrastkontur 41 nicht unmittelbar am Radhaus 5 ausgebildet, sondern vielmehr auf einer Tragkonsole 43. Diese ist mit einer lichten Bauhöhe Δh oberhalb des Bodenblechs 3 auf einem oberen Scheitel der Radhaus-Umfangswand 9 angebunden. Die Tragkonsole 43 weist einen bauteilsteifen Blech-Korpus 45 auf, der nach außen abgestellte Fügeflansche 47 aufweist, die am Radhaus 5 zum Beispiel durch Schweißpunkte angebunden sind. Die Tragkonsole 43 ist nicht alleine auf dem Radhaus-Hinterteil 15 befestigt, sondern vielmehr sowohl am Radhaus-Hinterteil 15 als auch am Radhaus-Vorderteil 17 befestigt. Zur Anbindung am Radhaus-Vorderteil 17 ist ein rechter Abschnitt des Tragkonsolen-Fügefansches 47 unmittelbar an einer zweiten Fügekontur 49 des Radhaus-Vorderteils 17 angebunden.

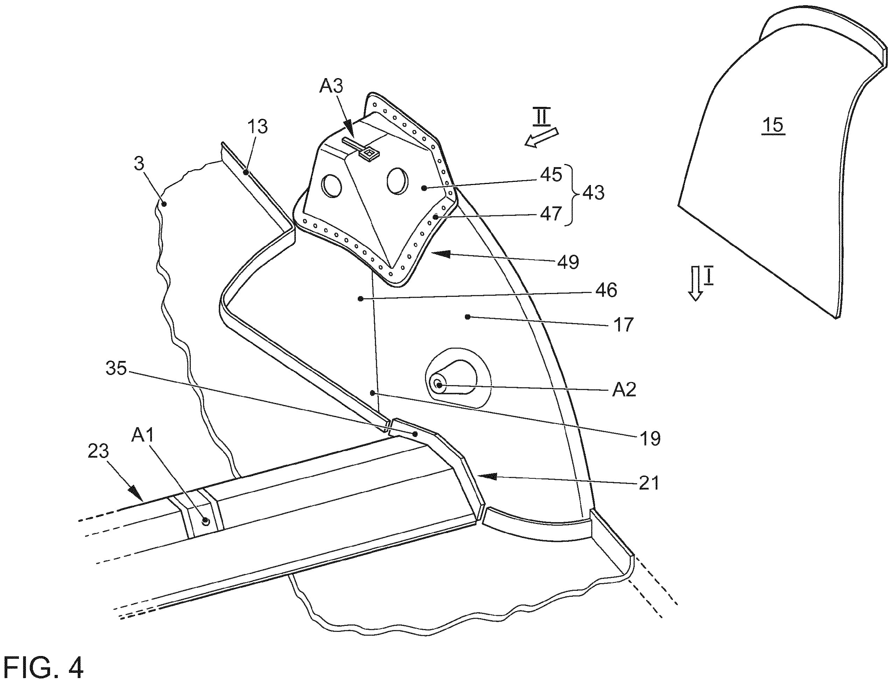

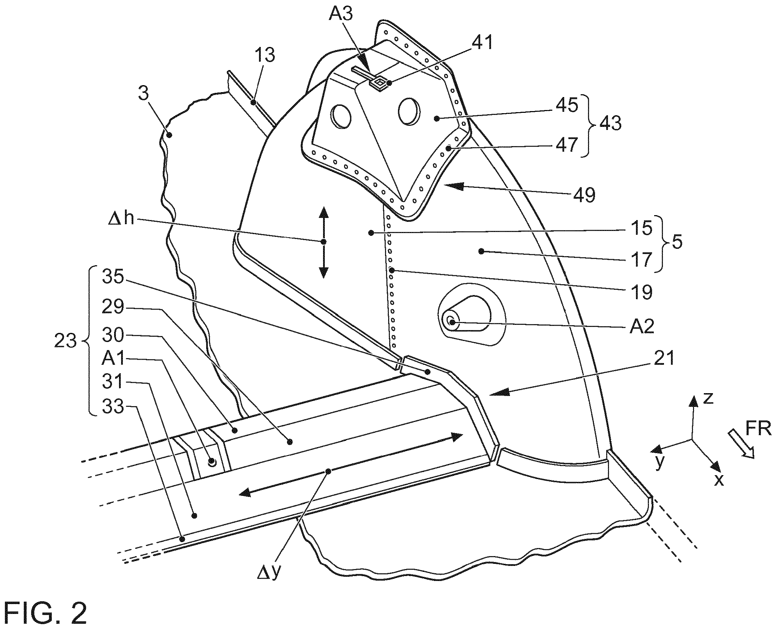

Die Anbindung der Tragkonsole 43 sowohl am Radhaus-Hinterteil 15 als auch am Radhaus-Vorderteil 17 ist im Hinblick auf die nachfolgend anhand der Fig. 3 und 4 veranschaulichten Fügefolge beim Zusammenbau der Karosseriestruktur von Vorteil: Demzufolge kann das Radhaus-Vorderteil 17, der Radhausquerträger 23 und die Tragkonsole 43 in einem Vormontagezustand (Fig. 3) zu einer separat Schweißbaugruppe B zusammengefasst sein. In der Schweißbaugruppe B ist der Radhausquerträger 23 stirnseitig an der ersten Fügekontur 21 des Radhaus-Vorderteils 17 angebunden, während die Tragkonsole 43 an der zweiten Fügekontur 49 des Radhaus-Vorderteils 17 angebunden ist. Auf diese Weise können die ersten bis dritten Sitzanbindungspunkte A1 bis A3 in der Schweißbaugruppe B (d.h. unabhängig von der Karosseriestruktur) in einfacher Weise robotergesteuert zueinander ausgerichtet werden. Anschließend wird die Schweißbaugruppe B in einer ersten Fügerichtung I (Fig. 4) mit dem Bodenblech 3 zusammengefügt.

Nach dieser ersten Fügeoperation ist das Radhaus-Hinterteil 15 noch nicht montiert. Entsprechend ist in der Fig. 4 zwischen dem Radhaus-Vorderteil 17 und dem Bodenblech 3 noch ein Freiraum 46 freigelegt. Erst in einer nachfolgenden Fügeoperation wird das Radhaus-Hinterteil 15 in einer zweiten Fügerichtung II (Fig. 4) an das Bodenblech 3 und an das Radhaus-Vorderteil 17 angefügt.

### Bezugszeichenliste

- 1: Laderaum
- 3: Bodenblech
- 5: Radhaus
- 7: Hinterrad
- 9: Umfangswand
- 11: Seitenwand
- 13: Längsflansch
- 15: Radhaus-Hinterteil
- 17: Radhaus-Vorderteil
- 19: Fügeflansche
- 21: erste Fügekontur
- 23: Radhaus-Querträger
- 29: Profilboden
- 30, 31: Profilflanken
- 33: Randflansche
- 35: stirnseitige Fügeflansche
- 37: Rücksitzbank
- 39: Rückenlehne
- 41: Gegenrastkontur
- 43: Tragkonsole
- 45: Blechkorpus
- 46: Freiraum
- 47: Fügeflansche
- 49: zweite Fügekontur
- I: erste Fügerichtung
- II: zweite Fügerichtung
- Δh: lichte Bauhöhe
- Δy: Querversatz
- A1, A2, A3: Sitzanbindungspunkte

## Patentansprüche

1. Karosseriestruktur für ein zweispuriges Fahrzeug, mit einem heckseitigen Laderaum (1), der bodenseitig durch ein Bodenblech (3) und in der Fahrzeugquerrichtung (y) beidseitig durch jeweils ein Radhaus (5) begrenzt ist, zwischen denen ein am Bodenblech (3) verlaufender Radhausquerträger (23) kraftübertragend abgestützt ist, **dadurch gekennzeichnet, dass** das Radhaus (5) in der Fahrzeuglängsrichtung (x) ein, das Fahrzeughinterrad (7) mit Abstand begrenzendes Radhaus-Hinterteil (15) und ein, das Fahrzeughinterrad (7) mit Abstand begrenzendes Radhaus-Vorderteil (17) aufweist, und dass das Radhaus-Vorderteil (17) mit einer Fügekontur (21) ausgebildet ist, die ohne Zwischenlage eines Eckverstärkungs-Blechteils mit einer Stirnseite (35) des Radhausquerträgers (23) unmittelbar in Anlage ist, und dass zur Eckverstärkung einer zwischen dem Radhaus-Vorderteil (17) und dem Bodenblech (3) aufgespannten Innenecke das Blechmaterial des Radhaus-Vorderteils (17) eine im Vergleich zum Radhaus-Hinterteil (15) größere Blechdicke aufweist.

2. Karosseriestruktur nach Anspruch 1, **dadurch gekennzeichnet, dass** der Radhausquerträger (23) ein insbesondere materialeinheitlich und/oder einstückig zwischen den Radhäusern (5) verlaufender, U-förmiger Hohlträger ist, dessen Hohlraum in der Fahrzeughochrichtung (z) nach unten vom Bodenblech (3) abgedeckt ist, und dass insbesondere der Radhausquerträger (23) einen vom Bodenblech (3) in der Fahrzeughochrichtung (z) beabstandeten Profilboden (29) aufweist, der in der Fahrzeuglängsrichtung (x) nach vorne und nach hinten in Profilflanken (30, 31) mit Randflanschen (33) übergeht, die am Bodenblech (3) angebunden sind.

3. Karosseriestruktur nach Anspruch 2, **dadurch gekennzeichnet, dass** der Profilquerschnitt des vom Radhausquerträger (23) begrenzten Hohlraums bis zur Fügeebene zwischen dem Radhausquerträger (23) und dem Radhaus-Vorderteil (17) durchgängig konstant ist, und/oder dass der Radhausquerträger (23) stirnseitig jeweils nach außen abgestellte Fügeflansche (35) aufweist, die an der Fügekontur (21) des Radhaus-Vorderteils (17) angebunden sind.

4. Karosseriestruktur nach einem der vorhergehenden Ansprüche, **dadurch gekennzeichnet, dass** im Fondbereich der Karosseriestruktur zumindest drei Sitzanbindungspunkte (A1, A2, A3) für eine Sitzanlage (37), insbesondere Rücksitzbank, vorgesehen sind, von denen ein erster Sitzanbindungspunkt (A1) am Radhausquerträger (23) positioniert ist, und zwar um einen Querversatz (Δy) vom Radhaus (5) nach fahrzeuginnen versetzt, ein zweiter Sitzanbindungspunkt (A2) am Radhaus (5) positioniert ist und ein dritter Sitzanbindungspunkt (A3) um einen Höhenversatz (Δz) oberhalb des ersten und zweiten Sitzanbindungspunkts (A1, A2) an der Fahrzeugseite positioniert ist, und dass insbesondere der dritte Sitzanbindungspunkt (A3) manuell lösbar ausgeführt ist, und zwar mit einem, an einer Rückenlehne (39) der Sitzanlage ausgebildeten Rastmittel und einer karosseriefesten Gegenrastkontur (41), und dass in einer hochgeklappten Gebrauchslage der Rückenlehne (39) das lehnenseitige Rastmittel und die karosseriefeste Gegenrastkontur (41) in Rasteingriff sind.

5. Karosseriestruktur nach Anspruch 4, **dadurch gekennzeichnet, dass** die karosseriefeste Gegenrastkontur (41) auf einer Tragkonsole (43) ausgebildet ist, und dass die Tragkonsole (43) mit einer lichten Höhe Bauhöhe (Δh) oberhalb des Bodenblechs (3) am Radhaus (5) angebunden ist.

6. Karosseriestruktur nach Anspruch 5, **dadurch gekennzeichnet, dass** das Radhaus-Vorderteil (17) eine zweite Fügekontur (49) aufweist, an der die Tragkonsole (43) zumindest teilweise angebunden ist, und/oder dass der zweite Sitzanbindungspunkt (A2) unmittelbar im Radhaus-Vorderteil (17) positioniert ist.

7. Karosseriestruktur nach Anspruch 6, **dadurch gekennzeichnet, dass** das Radhaus-Vorderteil (17), der Radhausquerträger (23) und die Tragkonsole (43) in einem Vormontagezustand zu einer separaten Baugruppe (B) zusammengefasst sind, in der der Radhausquerträger (23) an der ersten Fügekontur (21) des Radhaus-Vorderteils (17) und die Tragkonsole (43) an der zweiten Fügekontur (49) des Radhaus-Vorderteils (17) angebunden ist, und dass insbesondere eine Maßkette für die ersten bis dritten Sitzanbindungspunkte (A1, A2, A3) in der Baugruppe (B) zueinander positionsgenau in einem engen Toleranzfeldlagerichtig ausrichtbar sind.

## Claims

1. Body structure for a double-track vehicle, having a rear-side luggage compartment (1) which is bounded on the floor side by a floor panel (3) and on both sides in the transverse direction (y) of the vehicle by a respective wheelhouse (5), between which wheelhouses a wheelhouse crossmember (23) running along the floor panel (3) is supported in a force-transmitting manner, **characterized in that** the wheelhouse (5) has, in the longitudinal direction (x) of the vehicle, a wheelhouse rear part (15) bounding the vehicle rear wheel (7) at a distance, and a wheelhouse front part (17) bounding the vehicle rear wheel (7) at a distance, and **in that** the wheelhouse front part (17) is formed with a joining contour (21) which is directly in contact with an end side (35) of the wheelhouse crossmember (23) without the interposition of a corner-reinforcing sheet-metal part, and **in that**, for the corner reinforcement of an inner corner fixed between the wheelhouse front part (17) and the floor panel (3), the sheet-metal material of the wheelhouse front part (17) has a greater sheet-metal thickness in comparison to the wheelhouse rear part (15) .

2. Body structure according to Claim 1, **characterized in that** the wheelhouse crossmember (23) is a U-shaped hollow member which runs in particular in the same material and/or integrally between the wheelhouses (5), and the cavity of which is downwardly covered in the vertical direction (z) of the vehicle by the floor panel (3), and **in that** in particular the wheelhouse crossmember (23) has a profile base (29) which is spaced apart from the floor panel (3) in the vertical direction (z) of the vehicle and merges at the front and at the rear in the longitudinal direction (x) of the vehicle into profile flanks (30, 31) having edge flanges (33) which are connected to the floor panel (3).

3. Body structure according to Claim 2, **characterized in that** the profile cross section of the cavity bounded by the wheelhouse crossmember (23) as far as the joining plane between the wheelhouse crossmember (23) and the wheelhouse front part (17) is continuously constant, and/or **in that** the wheelhouse crossmember (23) has, on the end sides, in each case outwardly positioned joining flanges (35) which are connected to the joining contour (21) of the wheelhouse front part (17).

4. Body structure according to one of the preceding claims, **characterized in that** in the rear region of the body structure at least three seat connection points (A1, A2, A3) for a seat system (37), in particular rear seat bench, are provided, of which a first seat connection point (A1) is positioned on the wheelhouse crossmember (23), specifically offset from the wheelhouse (5) toward the interior of the vehicle by a transverse offset (Δy), a second seat connection point (A2) is positioned on the wheelhouse (5), and a third seat connection point (A3) is positioned on the vehicle side by a height offset (Δz) above the first and second seat connection points (A1, A2), and **in that** in particular the third seat connection point (A3) is designed to be manually releasable, specifically with a latching means formed on a backrest (39) of the seat system and with a body-mounted mating latching contour (41), and **in that**, in an upwardly tilted use position of the backrest (39), the backrest-side latching means and the body-mounted mating latching contour (41) are in latching engagement.

5. Body structure according to Claim 4, **characterized in that** the body-mounted mating latching contour (41) is formed on a supporting bracket (43), and **in that** the supporting bracket (43) is connected to the wheelhouse (5) at a clear overall height (Δh) above the floor panel (3).

6. Body structure according to Claim 5, **characterized in that** the wheelhouse front part (17) has a second joining contour (49) to which the supporting bracket (43) is at least partially connected, and/or **in that** the second seat connection point (A2) is positioned directly in the wheelhouse front part (17).

7. Body structure according to Claim 6, **characterized in that** the wheelhouse front part (17), the wheelhouse crossmember (23) and the supporting bracket (43) are combined in a preassembly state to form a separate assembly (B) in which the wheelhouse crossmember (23) is connected to the first joining contour (21) of the wheelhouse front part (17) and the supporting bracket (43) is connected to the second joining contour (49) of the wheelhouse front part (17), and **in that** in particular a dimensional chain for the first to third seat connection points (A1, A2, A3) can be oriented in a positionally correct manner with respect to one another in the assembly (B) in a precise position within an exacting tolerance field.

## Revendications

1. Structure de carrosserie pour un véhicule à quatre roues, comprenant un espace de chargement arrière (1), qui est délimité côté plancher par une tôle de plancher (3) et dans la direction transversale du véhicule (y) des deux côtés à chaque fois par un passage de roue (5), entre lesquels un support transversal de passage de roue (23) s'étendant sur la tôle de plancher (3) est soutenu en transmission de force, **caractérisée en ce que** le passage de roue (5) comprend, dans la direction longitudinale du véhicule (x), une partie arrière de passage de roue (15) délimitant à distance la roue arrière du véhicule (7) et une partie avant de passage de roue (17) délimitant à distance la roue arrière du véhicule (7), et **en ce que** la partie avant de passage de roue (17) est configurée avec un contour d'assemblage (21), qui est en appui direct sur un côté frontal (35) du support transversal de passage de roue (23) sans intercalage d'une partie de renforcement de coin en tôle, et **en ce que**, pour le renforcement de coin d'un coin intérieur défini entre la partie avant de passage de roue (17) et la tôle de plancher (3), le matériau de tôle de la partie avant de passage de roue (17) présente une épaisseur de tôle plus grande en comparaison de la partie arrière de passage de roue (15) .

2. Structure de carrosserie selon la revendication 1, **caractérisée en ce que** le support transversal de passage de roue (23) est un support creux en forme de U s'étendant notamment en le même matériau et/ou en une seule pièce entre les passages de roue (5), dont la cavité est recouverte dans la direction verticale du véhicule (z) vers le bas par la tôle de plancher (3), et **en ce que** le support transversal de passage de roue (23) comprend notamment un plancher profilé (29) espacé de la tôle de plancher (3) dans la direction verticale du véhicule (z), qui se raccorde à l'avant et à l'arrière dans la direction longitudinale du véhicule (x) avec des flancs profilés (30, 31) munis de flancs de bord (33), qui sont raccordés à la tôle de plancher (3) .

3. Structure de carrosserie selon la revendication 2, **caractérisée en ce que** la section transversale profilée de la cavité délimitée par le support transversal de passage de roue (23) est constante jusqu'au plan d'assemblage entre le support transversal de passage de roue (23) et la partie avant de passage de roue (17), et/ou **en ce que** le support transversal de passage de roue (23) comprend côté avant à chaque fois des flancs d'assemblage (35) tournés vers l'extérieur, qui sont raccordés au contour d'assemblage (21) de la partie avant de passage de roue (17).

4. Structure de carrosserie selon l'une quelconque des revendications précédentes, **caractérisée en ce que,** dans la zone arrière de la structure de carrosserie, au moins trois points de raccordement de siège (A1, A2, A3) pour un système de siège (37), notamment une banquette arrière, sont prévus, parmi lesquels un premier point de raccordement de siège (A1) est positionné sur le support transversal de passage de roue (23), et ce décalé du passage de roue (5) vers l'intérieur du véhicule avec un décalage transversal (Δy), un deuxième point de raccordement de siège (A2) est positionné sur le passage de roue (5) et un troisième point de raccordement de siège (A3) est positionné sur le côté du véhicule avec un décalage vertical (Δz) au-dessus du premier et du deuxième point de raccordement de siège (A1, A2), et **en ce que** le troisième point de raccordement de siège (A3) est notamment réalisé sous forme détachable manuellement, et ce avec un moyen d'encliquetage formé sur un dossier (39) du système de siège et un contour d'encliquetage complémentaire (41) fixé à la carrosserie, et **en ce que**, dans une position d'utilisation rabattue du dossier (39), le moyen d'encliquetage côté dossier et le contour d'encliquetage complémentaire (41) fixé à la carrosserie sont en prise d'encliquetage.

5. Structure de carrosserie selon la revendication 4, **caractérisée en ce que** le contour d'encliquetage complémentaire (41) fixé à la carrosserie est formé sur une console porteuse (43), et **en ce que** la console porteuse (43) est raccordée au passage de roue (5) à une hauteur de construction intérieure (Δh) au-dessus de la tôle de plancher (3).

6. Structure de carrosserie selon la revendication 5, **caractérisée en ce que** la partie avant de passage de roue (17) présente un deuxième contour d'assemblage (49), auquel la console porteuse (43) est au moins partiellement raccordée, et/ou **en ce que** le deuxième point de raccordement de siège (A2) est positionné directement dans la partie avant de passage de roue (17) .

7. Structure de carrosserie selon la revendication 6, **caractérisée en ce que** la partie avant de passage de roue (17), le support transversal de passage de roue (23) et la console porteuse (43) sont regroupés dans un état de prémontage en un sous-groupe séparé (B), dans lequel le support transversal de passage de roue (23) est raccordé au premier contour d'assemblage (21) de la partie avant de passage de roue (17) et la console porteuse (43) est raccordée au deuxième contour d'assemblage (49) de la partie avant de passage de roue (17), et **en ce qu'**une chaîne dimensionnelle pour les premier à troisième points de raccordement de siège (A1, A2, A3) dans le sous-groupe (B) peuvent notamment être orientés les uns par rapport aux autres en position exacte dans un champ de tolérance étroit.
